# EUROPEAN PATENT SPECIFICATION

(11) **EP 2 995 807 B1**
(45) Date of publication and mention of the grant of the patent: **01.11.2017**
(21) Application number: 14003170.9
(22) Date of filing: 12.09.2014
(51) Int. Cl.: F03B 13/14, F03B 13/24

(54) **System for obtaining electrical energy from a wave motion**
System zur Erzeugung von elektrischer Energie aus Wellenbewegung
Système d'obtention d'énergie électrique à partir d'un mouvement ondulatoire

(43) Date of publication of application: 16.03.2016
(73) Proprietor: RSE S.p.A., 20134 Milano (IT)
(72) Inventor: Peviani, Maximo Aurelio, 20134 Milano (IT)
(74) Representative: Ferraiolo, Ruggero

(56) References cited:
- EP-A1- 0 000 441
- EP-A1- 2 848 802
- CA-A1- 2 499 018
- FR-A1- 2 950 907
- GB-A- 2 189 552
- GB-A- 2 376 508
- US-A1- 2008 088 133

## Description

### Field of the invention.

The invention is in the field of systems that draw electricity from the energy of the wave motion, in particular from the sea wave movement.

### State of the art.

There are known several systems in this field of technology and, among many, some of those who have shown significant ability to achieve their purpose are cited here below.

Document CA 2 499 018 A1 discloses a sea wave hydraulic air compressor suitable for compressing air by using energy from the sea waves entering a wide open mouth provided at hits bottom; the compressor comprises levelling means that lower or lift it during high or low tides.

Document GB 2 376 508 A discloses a turbine comprising a hollow hub provided with a power generator using tidal or river flow or waves when it is mounted vertically in a L shaped duct.

Document GB 2 189 552 A discloses a wave activated power generating device comprising an L shaper duct in fluidic communication and generating means for generating electrical energy.

The system known as "LIMPET" (Land Installed Marine Power Energy Transmitter) was designed as an oblique concrete pipe built into the rock of a cliff at a depth of 10 meters for an output of 75 kW using a Wells turbine and an electric induction generator.

The system known as "REWEC" (Resonant Wave Energy Converter) is designed to be integrated into breakwaters and harbour defence structures. The distinguishing feature of "REWEC" is the input opening in the air chamber, which opening is divided into a double barrier, designed to maximize the oscillation of the surface level of the water. Devices scale prototypes were installed near Calabrian side of the Strait of Messina.

The device known as "Seawave - Slot-Cone Generator" (SSG) - is of the overtopping type. This technology has been designed to operate at the same time as breakwaters in coastal areas as energy converter. The basic principle of the SSG is the classic "overtopping" in which it is used the difference in gravitational potential energy between the highest part (ridge) and lowest part (wave hollow) of the wave. The structure consists of a ramp for the ascent of the waves in which, at different heights, cracks open for the entrance of the waves that reach inner tanks placed at different levels with respect to the free surface of the water. The stored water is allowed to flow through turbines during the passage of the subsequent wave hollows.

In the system known as "OCEAN NAVITAS" a converter is under development to be installed on coastal defence works such as breakwaters and bulwark. This system, also known as "Aegir Dynamo", in addition to the shoreline solution, can be designed to be installed nearshore or offshore, given that it is capable of absorbing energy from all directions of origin of the wave with a "point adsorber".

Aegir Dynamo comprises a fixed and emerged structure in which electrical components are housed and a floating buoy free to perform vertical movements following the wave motion. The oscillations of the buoy impart a rotational movement to a generator, within which a fixed magnet is positioned that produces electricity. This system is able to start generating energy with waves of 30 cm, with an optimum yield of 45 kW with waves of 1.5 meters for each single module.

Moreover, documents US 5770893 A, WO 2009/009733 A1, US 2009/211241 A1, US 6 768 216 B1 and JP S57 70959 A are known that, taken together, disclose certain systems for obtaining electrical energy from a wave motion in which a pipe comprises means for transforming the energy of the captured wave motion into electrical energy, whereby the pipe takes inside a hydraulic turbine and an electric generator connected to each other to generate electricity and extends at its bottom as a water inlet adapted to capture the water wave, a buoy being comprised for imparting an acending or descending movement to the pipe submerged in the water.

### Disadvantages of the state of the art.

The apparatus discoled in documents CA 2 499 018 A1 and GB 2 198 552 A produces electric energy through the compression of air and as such the efficiency of the system is low.

Document GB 2 376 508 A presents a rather complex mechanical structure that, considering the likely high construction cost that, together with the expected low efficiency of the turbine with v-shaped vanes, should make it not so economically convenient.

LIMPET and REWEC systems have in common the following disadvantages.

Loss of energy generation: both devices use a two direction turbine localized in the gas phase, i.e. in the air chamber of the device.This fact entails a loss of the available energy for the electricity generation, which energy is consumed in losses due to friction, turbulence, compressibility, etc. in addition to lower kinetic energy exploitable per unit volume of fluid, associated with the ratio of specific mass air/water.

High cost of implementation: the installation of these systems requires the construction of civil coastal works, large concrete caissons with a high associated cost.

Reduced constructive flexibility: these systems have a reduced flexibility of construction, for example, can not be used in existing facilities (moles of ports, docks, barriers, breakwaters, etc...) that could cause reduction of implementation cost, and then always require an "ad hoc" construction.

SEAWAGE system shows loss of energy generation: the potential energy of the wave is used, only in the descending phase of the water, with a considerable loss of the available energy for electricity generation, due both to the wave reflection and to the loss in the water ascent along the structure (due friction, turbulence, entry into the tanks, etc..). High cost of implementation: the installation of this device requires the construction of large civil coastal works, with high associated costs. Reduced flexibility of construction: the system has a reduced flexibility in construction, for example, SEAWAVE can not be used in existing structures (piers ports, benches, barriers, breakwaters, etc...) that could reduce the cost of implementation, then always requiring an "ad hoc"construction.

OCEAN NAVITAS system is affected by loss of energy generation: the system uses a floating buoy which performs vertical movements; it is therefore necessary to use a mechanism for transforming the rotating movement of the generator, with consequent loss of generation energy.

Finally, the systems named above and the documents listed at the bottom of the state of the art paragraph do not disclose desirable mechanical devices for controlling the vertical and horizontal movement of the pipe according to the height and direction of the outer wave motion.

### Scope of the invention.

The scope of the invention is to generate electricity by transforming the energy available in the sea wave movement by means of a work installed in typicals sea sites and certain Mediterranean coastal structures, such as docks harbours, docks, fences and breakwaters. The system particularly fits the characteristics of the waves of the Mediterranean Sea, but can be adopted in marine areas that present affinity with the Mediterranean.

### Background of the invention.

According to the state of the art, the idea of solution of the technical problem is to convey the sea water being in wave motion within a vertical or sub vertical pipe (in the following, for simplicity, only vertical pipe will be referred to) in which the water can perform vertical ascending and descending movements following the alternation of the arriving wave. Preferably, the pipe comprises a narrow section suitable to create the optimum hydrodynamic conditions of pressure and speed of the water flow into the pipe, such that a hydraulic turbine connected to a generator of electricity operates efficiently. The hydraulic turbine is preferably of the bi-directional type that allows rotation of the rotor in the same direction, regardless of the direction of water flow within the pipe, ascending or descending.

According to this invention, the system includes mechanical displacement devices which, controlled by mechanical and or optics probes through a suitable software, cause the horizontal rotation of the pipe according to the direction of the waves in arrival, the pipe bottom end being designed with a double bending radius such as to cause a large water inlet, which minimizes the losses due to friction and turbulence into the pipe and inlet taking advantage of the maximum possible energy from the wave motion. An ascent and descent of the pipe as designed in the mechanical dispacement devices comprise lowering the pipe with its bottom end near to the sea bottom as well as lifting the pipe out of the water.

The large water inlet has elliptical or oval outline with the main axis vertical or horizontal or has circular, square or rectangular outline.

It is understood that in the system invented the dimentions of the pipe and water inlet, the vertical and horizontal movement range, the features of the hydraulic turbine and electric generator will be defined taking into account the engineering, the results of tests on scale models and existing systems, the energetic performances required from the system as well as the characteristics of the wave motion prevailing on the chosen site.

### Advantages of the invention.

A first advantage of the invention is to permit the control of the submergence of the hydraulic turbine, namely the control of the depth of the turbine in function of the height of the outer wave motion so that the turbine is maintained below the minimum level of the outer wave motion, keeping at the same time the device near to the water surface where maximum energy from wave motion is available. Another advantage of the vertical movement is the possibility to move down the device near to the sea bottom in case of a sea storm in order to avoid damage to the instrumentation. In the same way, the vertical movement allows to move the device out of the water to facilate the maintainance operation.

Another advantage of the invention is to permit the horizontal orientation of the water inlet so that the latter faces the water wave in arrival and captures the maximum water quantity. Still another advantage of the invention comes from the pipe bottom end being designed with a double bending radius such as to cause a large water inlet, which minimize the losses due to friction and turbulence into the pipe end and inlet and take advantage of the maximum possible energy of the wave motion.

This system offers further advantages from the construction point of view: the system can be realized at a low cost the design of the proposed system being of modular type, allowing ample freedom of sizes and placements, being able to be installed both individually and in batteries of several elements. The modularity, associated with the fact that the main elements of the proposed system are available on the market, makes the invention particularly attractive from the economic point of view (see the disadvantages of known systems). Finally, it is realized a high constructive flexibility: the proposed system can be installed using as a support existing coastal structures, such as docks harbors, docks, fences, breakwaters, etc. with consequent simplifications in the construction, resulting in further cost reduction, compared to known systems.

### Example of Embodiment

The invention will now be illustrated with examples of embodiments and the help of the diagrammatic drawings, in which
- Fig 1 is an overall view of a system,
- Fig. 2 is a first side view and
- Fig. 3 is a secondi side view.

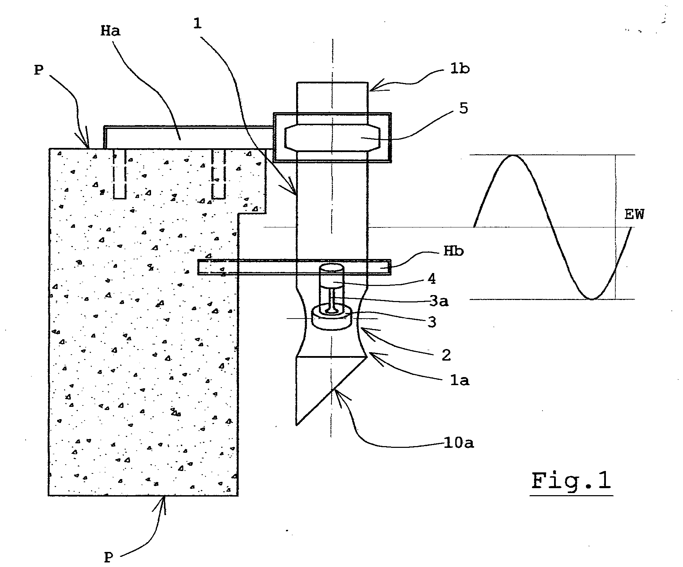

Figure 1 shows a system with a pipe 1 and its first upper element 1b franked with sealing means Ha and Hb at the end of a maritime pier P, the second intake lower element 1a with its water inlet 10a, the narrow section 2 in which the bi-directional hydraulic turbine 3 is placed, the transmission shaft 3a, the electric generator 4 and the displacement device 5 suitable to move the pipe 1 upwards or downwards and rotate horizontally. It can be seen that the hydraulic turbine 3 is below the minimum level of the outer wave motion EW.

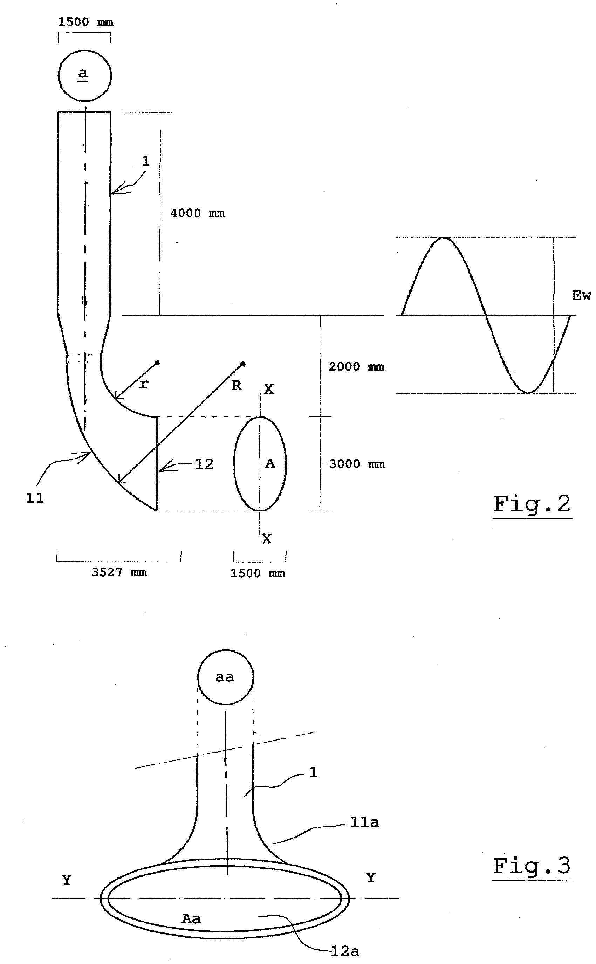

Fig. 2 shows a system where the pipe bottom end 11 is designed by a double bending radius, R = 5.000 mm and r = 1.553 mm plotted on the same vertical plane, and the water inlet 12 has elliptical outline with the main axis X-X vertical. The cross section A of the water inlet 12 is about twice the cross section a of the pipe 1 . This embodiment is suitable for installation on the Mediterranean wave climate, such as certain Italian coasts (Tirrenian sea, West Sardinia or along the southern Siciliy island).

- Fig. 3 shows a system where the pipe bottom end 11a is designed with a double bending radius plotted in the same vertical plane, and the water inlet 12a has elliptical outline with the main axis Y-Y horizontal. The cross section Aa of the water inlet 12 is about 2,25 times the cross section aa of the pipe 1.

## Claims

1. System for obtaining electrical energy from a wave motion in which a pipe (1) partly submerged in water comprises internally a hydraulic turbine (3) and an electric generator (4) connected to each other to generate electricity, said pipe further comprising external means (5) for imparting up and down movement to the pipe (1) suitable for keeping the the hydraulic turbine below the minimum level of the outer wave motion (EW) and wherein said pipe extends at its bottom in a water inlet (10a, 12) adapted to capture the water wave, **characterized in that** it comprises:
- mechanical means (5) for imparting horizontal rotation to the pipe (1) suitable for placing the water inlet (10a, 12) in face of the incoming water wave,
- a pipe bottom end (11) designed with a double bending radius (R, r) suitable for causing a water inlet (12, 12a) of cross section (A) larger than the pipe cross section (a).

2. System according to claim 1 **characterized in that** the water inlet (12) has elliptical outline with the main axis (X-X) vertical.

3. System according to claim 1 **characterized in that** the water inlet (12a) has elliptical outline with the main axis (Y-Y) horizontal.

4. System according to claim 1 **characterized in that** the water inlet (12) has oval or circular or square or rectangular outline.

5. System according to claims 1 - 4 **characterized in that** the mechanical means (5) are adapted to lower the pipe with its bottom end near to the sea bottom as well as lifting the pipe out of the water.

## Patentansprüche

1. System zur Erzeugung elektrischer Energie aus einer Wellenbewegung, wobei ein Rohr (1), das teilweise in Wasser untergetaucht ist, intern eine Hydraulikturbine (3) und einen elektrischen Generator (4) aufweist, die zur Erzeugung von Elektrizität miteinander verbunden sind, wobei das Rohr ferner externe Mittel (5) zum Vermitteln einer Auf- und Ab-Bewegung an das Rohr (1) aufweist, die geeignet ist, um die Hydraulikturbine unterhalb eines Minimalpegels der äußeren Wellenbewegung (EW) zu halten, und wobei sich das Rohr an seinem Unterteil in einen Wassereinlass (10a, 12) erstreckt, der ausgebildet ist, um die Wasserwelle einzufangen, **dadurch gekennzeichnet, dass** es aufweist:
mechanische Mittel (5) zur Vermittlung einer Horizontaldrehung an das Rohr (1), die geeignet ist, um den Wassereinlass (10a, 12) in Front der eingehenden Wasserwelle zu drehen,
ein Rohr-Unterende (11), das mit einem Doppelbiegeradius (R, r) ausgestaltet ist, der geeignet ist, um einen Wassereinlass (12, 12a) mit einem Querschnitt (A) zu verursachen, der größer ist als der Rohrleitungsquerschnitt (a).

2. System nach Anspruch 1, **dadurch gekennzeichnet, dass** der Wassereinlass (12) eine elliptische Gestaltung aufweist, wobei die Hauptachse (X-X) vertikal ist.

3. System nach Anspruch 1, **dadurch gekennzeichnet, dass** der Wassereinlass (12a) eine elliptische Gestaltung aufweist, wobei die Hauptachse (Y-Y) horizontal ist.

4. System nach Anspruch 1, **dadurch gekennzeichnet, dass** der Wassereinlass (12) eine ovale oder kreisförmige oder quadratische oder rechteckige Gestaltung aufweist.

5. System nach Anspruch 1-4, **dadurch gekennzeichnet, dass** die mechanischen Mittel (5) ausgebildet sind, um das Rohr mit seinem Unterende in die Nähe des Meeresgrundes abzusenken sowie das Rohr aus dem Wasser zu heben.

## Revendications

1. Système d'obtention d'énergie électrique à partir d'un mouvement ondulatoire dans lequel un tuyau (1) partiellement immergé dans de l'eau renferme à sa partie interne :
une turbine hydraulique (3) et un générateur électrique (4) reliés l'un à l'autre pour permettre de générer de l'électricité, ce tuyau comprenant en outre des moyens externes (5) susceptibles de lui transmettre un mouvement de bas en haut permettant de maintenir la turbine hydraulique au-dessous du niveau minimum du mouvement ondulatoire externe (EW), et le tuyau s'étendant, à sa partie inférieure dans une entrée d'eau (10a, 12) susceptible de capter l'ondulation de l'eau,
**caractérisé en ce qu'**il comporte
- des moyens mécaniques (5) permettant de transmettre une rotation horizontale au tube (1) susceptible de positionner l'entrée d'eau (10a, 12) en regard de l'onde d'eau entrant,
- une extrémité inférieure de tuyau (11) ayant un double rayon de cintrage (R, r) permettant d'obtenir l'entrée d'eau (12, 12a) ayant une section transversale (A) supérieure à la section transversale (a) du tuyau.

2. Système conforme à la revendication 1,
**caractérisé en ce que**
l'entrée d'eau (12) a un contour elliptique dont le grand axe (X-X) est vertical.

3. Système conforme à la revendication 1,
**caractérisé en ce que**
l'entrée d'eau (12a) a un contour elliptique dont le grand axe (Y-Y) est horizontal.

4. Système conforme à la revendication 1,
**caractérisé en ce que**
l'entrée d'eau (12) a un contour ovale, circulaire, carré ou rectangulaire.

5. Système conforme aux revendications 1 à 4,
**caractérisé en ce que**
les moyens mécaniques (5) sont susceptibles d'abaisser l'extrémité inférieure du tuyau à proximité du fond de la mer et également de lever le tuyau hors de l'eau.
